# EUROPEAN PATENT SPECIFICATION

(11) **EP 4 088 919 B1**
(45) Date of publication and mention of the grant of the patent: **01.05.2024**
(21) Application number: 22172248.1
(22) Date of filing: 09.05.2022
(51) Int. Cl.: B29D 30/00

(54) **A METHOD OF TRANSFERRING BEADS AND SEPARATORS, THE EQUIPMENT FOR APPLYING THE METHOD, AND THE SEPARATOR FOR USE IN THE METHOD**
VERFAHREN ZUR ÜBERTRAGUNG VON PERLEN UND SEPARATOREN, AUSRÜSTUNG ZUR ANWENDUNG DES VERFAHRENS UND ABSCHEIDER ZUR VERWENDUNG IN DEM VERFAHREN
PROCÉDÉ DE TRANSFERT DE BILLES ET DE SÉPARATEURS, ÉQUIPEMENT POUR L'APPLICATION DU PROCÉDÉ ET LE SÉPARATEUR À UTILISER DANS LE PROCÉDÉ

(30) Priority: 10.05.2021 SK 500272021
(43) Date of publication of application: 16.11.2022
(73) Proprietor: Mesnac European Research And Technical Centre S.R.O, 914 01 Trencianska Teplá (SK)
(72) Inventor: Bakos, Stefan, 020 01 Puchov (SK)
(74) Representative: Majlingová, Zuzana

(56) References cited:
- EP-A1- 2 328 745
- EP-B1- 2 328 745
- WO-A1-2020/242294
- JP-A- H11 180 558

## Description

### Technical field

The present invention relates to a method of transferring and placing beads for the manufacture of car tyres, and the equipment for carrying out the method.

### Backround art

The known method and equipment for the transfer and placement of beads and spacers used in this method is described in EP2 328 745 - Slovak equivalent E14974. The method described in this patent comprises clamping and retaining a bead together with a spacer (separator) from a bead stack and transferring the gripped separator together with the bead to a collection point for empty spacers, where, during the transfer, the clamping device grips the bead from the spacer and holds it. The spacer is deposited to a collection tray and the bead is transfered further to the tyre making machine. The equipment for carrying out this method comprises one set of equipment for gripping and holding the spacer with at least two clamp jaws, and another set of equipment for gripping and transferring the bead. The equipment for engaging the spacer is fitted with two alignment pins located opposite each other and at the same angular distance between the clamp jaws. The disadvantage of the above device is its complex construction.

The aim of the present invention is to simplify the equipment and so produce cost savings associated with operation of the equipment, as well as to provide an alternative method for the transfer and placement of beads.

By simplifying the equipment, its weight and price will also decrease. The energy savings in operating such equipment are also not insignificant.

### Summary of the invention

The object of the present invention is to provide alternative methods for the transfer and placement of bead for tyres, and the equipment and separator used for carrying out these methods.

The method of transferring tyre beads and separators for is defined by independent claim 1.

The above method may be modified such that the collection trays are in cart form and contain a fixed separator, and the number of separators per tray in stacking point A including the fixed separator is divisible by N, wherein the method further comprises:
- repeating step vii until, in step ii, the last bead stored on the tray in stacking point A is clamped;
- performing step iii; and
- moving the clamping unit to stacking point A and clamping the empty tray via the fixed separator thereon;
- moving the clamping unit with the clamped tray and separators to collection point C; and
- releasing the tray and the separators stored thereon to collection point C, from which the separator tray that was already filled with an appropriate number of separators was previously removed.

ForeH-efthe above methods, the clamping of the Nth separator is preferably carried out by inserting the clamp elongated portions through the radial openings of the stacked N separators by vertically moving the clamping unit and then radially moving the clamping means inwards until the clamping means fits under the clamping edges of the Nth separator.

For the aforementioned methods, the clamping of the bead is carried out by inserting the elongated parts with the fitting through the radial openings of at least one separator by vertically moving the clamping unit and then radially moving the clamping means outwards until the clamp fitting fits under the bead.

Another object of the present invention is the equipment for transferring and placing beads and separators, facilitating the above methods, wherein the equipment comprises:
- a clamping unit with at least two arms arranged at the same angular distance, where each arm includes:
   ∘ a radially movable means for clamping both the bead and the separator, wherein it is capable of clamping either the wire or separator (each separately), and wherein the means comprises an elongated part mounted vertically in a downward direction, where the free end of the elongated part houses a fitting in the form of a horizontal stop in at least the radial directions, whereby the elongated part with the fitting forms a jaw;
   ∘ an actuator adapted for synchronous control of the movement of the clamping means;
- a frame on which a coordinate drive is movably mounted, allowing movement of the clamping unit on x, y and z axes (in two horizontal axes and one vertical axis);
- stacking point A for at least one tray with a supply of alternately stacked separators and beads, wherein the separators have radial openings adapted to receive the jaw of the clamping unit;
- transfer point B comprising a mobile unit for transferring the bead to the building drum; and
- collection point C comprising at least one collection tray for separators.

Alternatively, the coordinate drive can be replaced by an industrial robot that facilitates movement of the clamping unit.

The elongated part of the clamping device should preferably have rounded edges so as not to damage the bead when clamping it.

The length of the extended part of the clamping device corresponds to at least twice the height of the separator, preferably four, five or six times the height of the separator.

The fitting of the clamping device may be in the form of a mount.

According to the preferred embodiment, each arm of the clamping unit may comprise two separate radially moving clamping means, of the same construction as above. One means serves for clamping the bead and the other means serves for clamping the separator.

According to the preferred embodiment, the clamping unit comprises four arms arranged at the same angular distance from each other. Wherein each arm comprises one clamping means for clamping both the bead and the separator, or one clamping means for clamping the bead and one clamping means for clamping the separator.

According to the preferred embodiment, the clamping means located on one arm are connected to the actuator(s) and the movement of the other clamping means located on the other arms are synchronized by means of cable transmission.

According to the preferred embodiment, the clamping means may comprise support elements for transferring raw car tyres.

According to the preferred embodiment, the feeder trays are in the form of a cart, where the cart preferably includes a fixed separator.

The present invention also relates to a specially modified bead separator structurally suitable for use in the above-mentioned methods of transferring beads and separators. The separator according to the present invention is in the form of a truncated conical shell forming a holding area for the beads and bound by an inner ring and an outer ring, and comprising a series of positioning pins spaced around the circumference of the inner ring, and a series of raised projections spaced around the holding area from the outer side along the circle defining the innermost position of the bead. The separator on the holding area further comprises at least two, preferably four, radial openings, wherein the radial openings are arranged at an equal angular distance from each other, and wherein each radial opening has a clamping edge, in the form of a segment perpendicular to the radius of the separator or a curve arranged concentrically with the inner ring, between the inner ring and the circle passing through the projections, such that the radial opening space defined by the clamping edge and the circle passing through the projections is sufficiently large/adapted to receive the jaw(s) of the clamping unit of the device for transferring and placing beads and separators according to the present invention. Preferably, the radial openings are arranged along almost the entire length of the holding area in the form of a truncated conical shell on one side bordered by the clamping edge and on the other side by the outer ring.

According to the preferred embodiment, the separator comprises relief cut-outs on the holding area - the shell of the truncated cone, so that the inner and outer rings are not disrupted.

The separator is preferably made of a lightweight recyclable polymer such as: acrylonitrile butadiene styrene (ABS TERLURAN), polypropylene (TIPPLEN K 499)

### Brief description of the drawings

Figure 1 illustrates the arrangement of the equipment for transferring and placing the beads from a tray to a mobile cart of a building drum, according to the present invention.
Figure 2 illustrates the clamping unit of the device for transferring and placing the beads and separators according to the present invention.
Figure 3 illustrates the clamping unit ready to grip the first bead stacked on the tray.
Figure 4 shows the clamping unit gripping the first clamped bead.
Figure 5 illustrates the clamping unit with a clamped second bead and one separator placed on the wire.
Figure 6 illustrates the clamping unit with a second released bead and a clamped separator.
Figure 7A shows the clamping unit ready to clamp a further (third) bead stacked on the tray on which two separators are placed.
Figure 7B shows the clamping unit with a third clamped bead on which two separators are placed.
Figure 8 illustrates the clamping unit with a released third bead and clamped bottom separator.
Figure 9A shows stacking point A, transfer point B, collection point C and the path taken by the clamping unit between points A, B and C.
Figure 9B shows the top view of each of points A, B and C of the classification according to the invention and the path taken by the clamping unit between the points.
Figure 10A illustrates the clamping unit with a clamped fourth bead above which four separators and three beads are alternately arranged, wherein the clamping unit is arranged above the mobile unit.
Figure 10B illustrates the clamping unit with a clamped fourth separator above which three beads and three separators are alternately arranged.
Figure 10C shows the clamping unit with a clamped third bead above which three separators and two beads are alternately stacked.
Figure 11 illustrates the clamping unit with two separate means for clamping a bead and a separator on each arm.
Figure 12 shows the separator according to the invention.
Figures 13A and 13B show two embodiments of the tools for clamping the bead and the separator.

### Detailed description

### Example 1

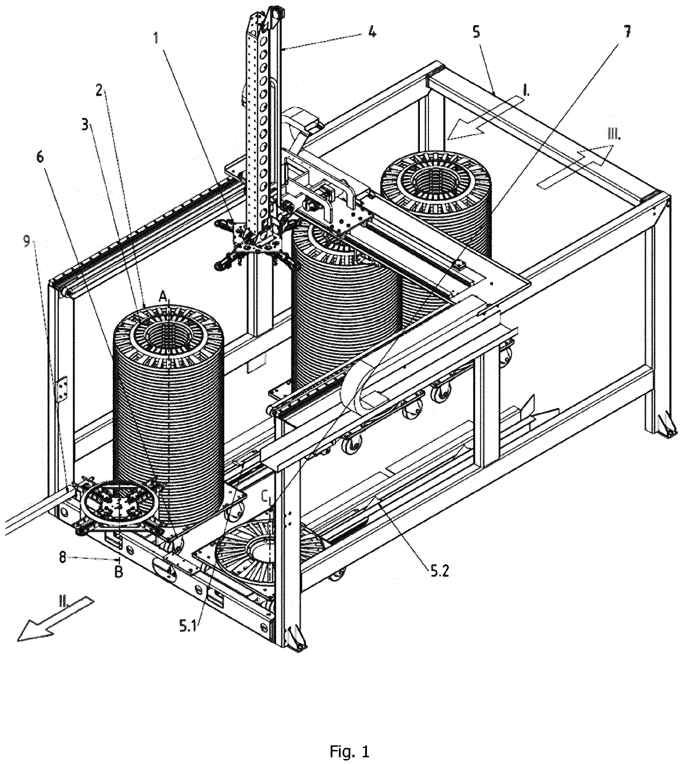

The apparatus for transferring and placing beads 3 and separators 2 shown in Figure 1A, suitable for transferring beads from a supply tray to a building drum (to mobile unit 9 of the building drum), comprises a frame 5 on which a coordinate drive 4 is mounted thereon, and which carries the clamping unit 1. The apparatus further comprises stacking point A 6 comprising a supply stack in the form of a cart on which is placed a supply of beads 3 separated by separators 2. The apparatus further comprises transfer point B 8 comprising a mobile unit 9 for transporting the bead wire 3 to the building drum, and a collection point C 7 comprising a single empty tray in the form of a cart on which the empty separators 2 are stowed. Arrows I and II and III indicate the flow of materials, where arrow I indicates the movement of the tray with the supply of clamped beads 3 and separators 2 on the first conveyor 5.1 to stacking point A, arrow II indicates the movement of the mobile unit 9 of the building drum with the clamped beads 3 from transfer point B 8 to the building drum, and arrow III indicates the movement of the tray after being filled with separators, along the second conveyor 5.2 from the collection point C 7.

### Example 2

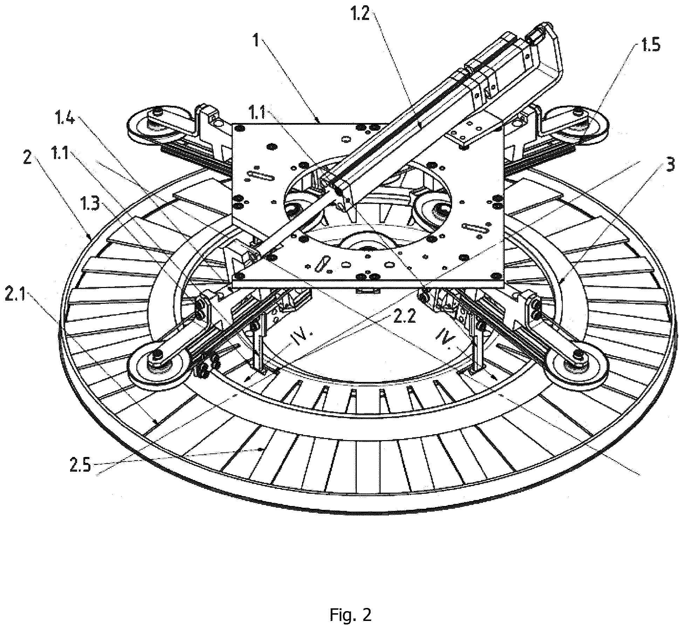

The clamping unit 1 of the above-mentioned apparatus according to the present invention, shown in Figure 2, comprises four radially arranged arms 1.4 at the same angular distance (90°) from each other, wherein each arm comprises a radially movable means for clamping both the bead 3 and the separator 2, which comprises an elongated part 1.1 arranged vertically in a downward direction. At the free end of the elongated part 1.1 there is a fitting 1.3 in the form of a horizontal stop. Together, the elongated part 1.1 and the fitting 1.3 form the jaw of the clamping unit. The clamping unit further comprises an actuator 1.2 in the form of a pneumatic cylinder that drives one clamping means, while the movement is transmitted to the other three clamping means located on the other arms via cable transmission 1.5.

Also shown in Figure 2 is a separator 2 comprising relief cutouts 2.5 and four radial openings 2.1. A bead 3 is placed on the separator 2. Each radial opening 2.1 includes a clamping edge 2.2. Arrows IV show the direction of movement of the jaws in the radial openings 2.1 of the separator 2 from the clamping edge 2.2 to the bead 3 placed thereon.

### Example 3

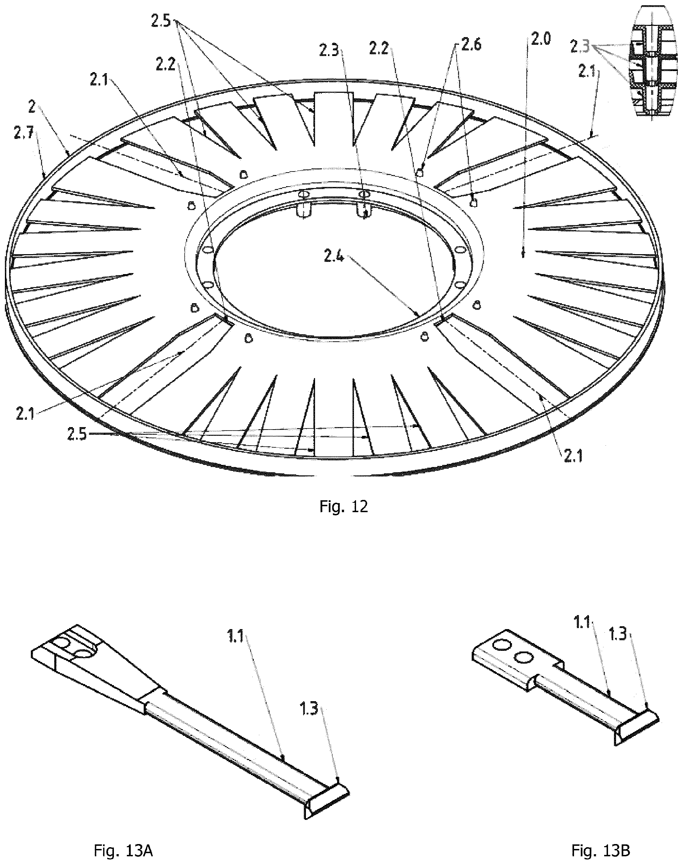

The separator 2 according to the present invention, suitable for use in the methods according to the present invention, shown in Figure 12, has a holding area 2.0 for the clamped beads in the form of a truncated conical shell within the inner ring 2.4 and the outer ring 2.7. Further comprising a series of positioning pins 2.3 spaced from the underside around the circumference of the inner ring 2.4, and a series of raised projections 2.6 spaced around the holding area 2.0 from the top side of the holding area 2.0 around the circle defining the innermost extreme position of the bead 3. The holding area 2.0 on the separator 2 also includes four radial openings 2.1 for vertical entry of the jaws of the clamping unit 1, arranged at the same angular distance of 90° from each other. Each radial opening 2.1 comprises a clamping edge 2.2 in the form of a segment or curve, arranged concentrically with the inner ring 2.4 between the inner ring 2.4 and the circle passing through the projections 2.6. The space of the radial opening 2.1 defined by the clamping edge 2.2 and the circle passing through the protrusions 2.6 is sufficiently large/adapted for entry of the jaw of the clamping unit 1.

### Example 4

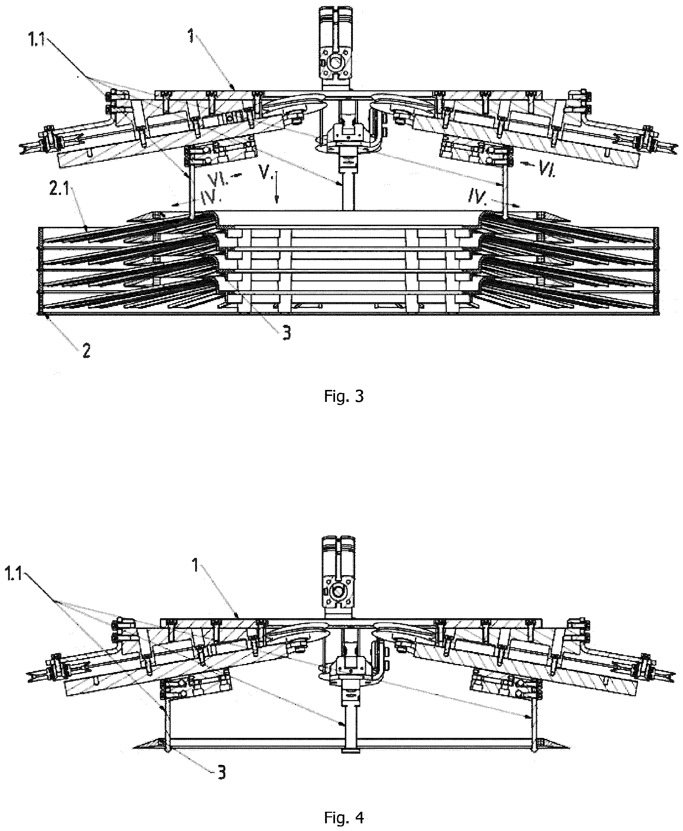

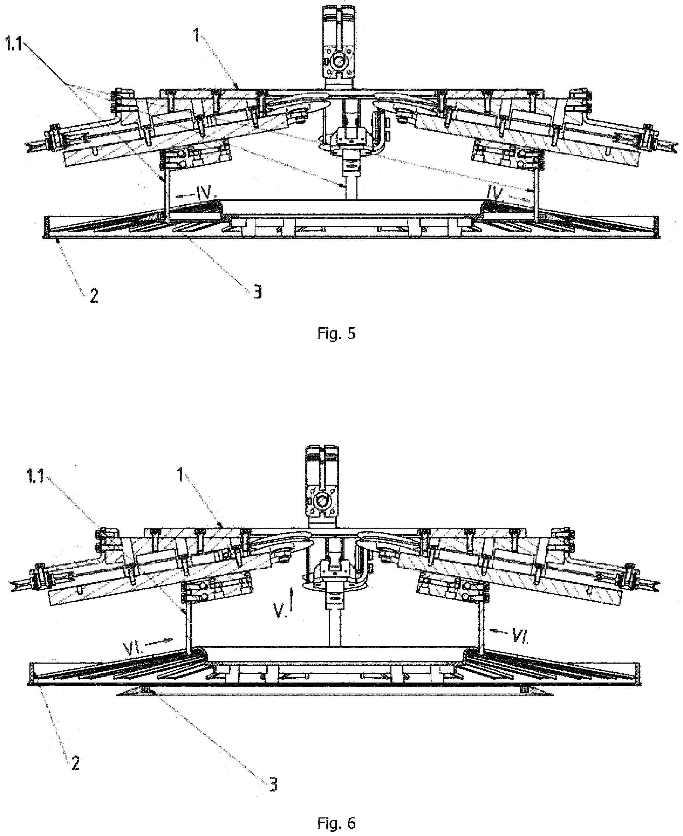

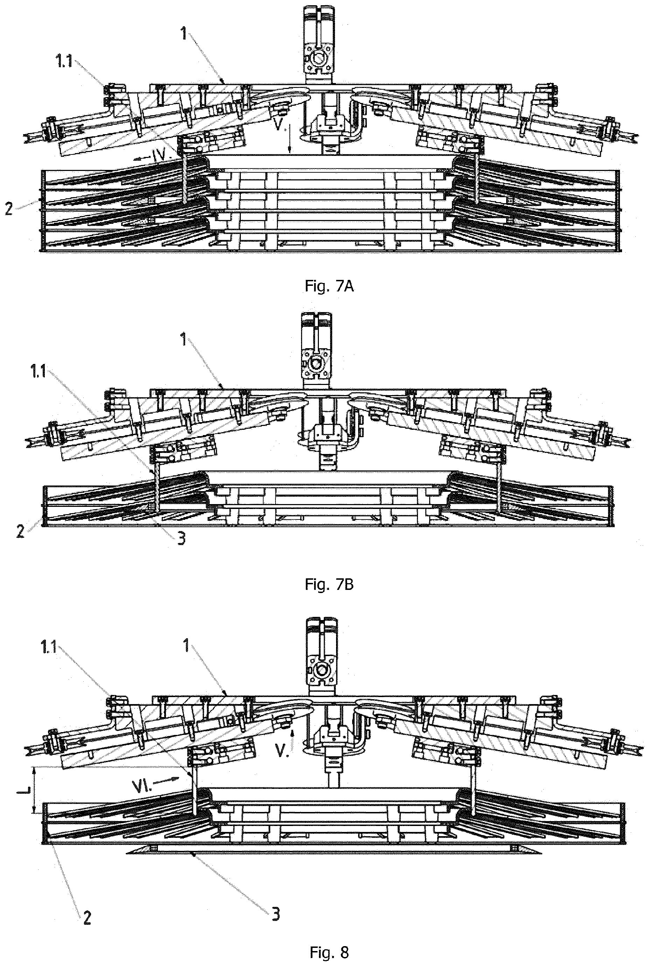

The method of transferring beads 3 from the tray to the mobile unit 9 of the building drum, for example by the equipment described in Example 1, is illustrated in Figures 3 to 8. The method comprises the following steps:
a) moving the clamping unit 1 to stacking point A 6,
b) overhead clamping of the first bead 3 stowed on the stack using the clamping unit 1, by moving the jaws in the direction of the arrows V and subsequently IV (see Figure 3);
c) moving the clamping unit 1 with the clamped bead 3 (see Figure 4) to transfer point B 8 and releasing the bead 3 onto the mobile unit of the building drum (not shown),
d) moving the empty clamping unit 1 to stacking point A,
e) overhead clamping of the first bead 3 stored on the stack by vertical entry of the jaws of the clamping unit 1 through the radial holes (2.1) of the separator 2 placed on the bead 3, by moving the jaws in the direction of arrows V and then IV (see Figure 5);
f) moving the clamping unit 1 with the clamped bead 3 and one separator 2 mounted thereon to transfer point B 8 and releasing the bead 3 onto the mobile unit (not shown) and clamping the separator 2, by moving the jaws in the direction of arrows VI and then V (see Figure 6);
g) moving the clamping unit 1 with the clamped separator 2 to stacking point A 6, and releasing the separator 2 onto the cart tray,
h) overhead clamping of the first bead 3 stowed on the stack by vertical entry of the jaws of the clamping unit 1 through the radial holes 2.1 of the two separators 2 placed on the bead 3, by moving the jaws in the direction of the arrows V and subsequently IV (see Fig. 7a);
i) moving the clamping unit 1 with the clamped bead 3 and two separators 2 mounted thereon (see Fig. 7b) to transfer point B 8 and releasing the bead 3 onto the mobile unit (not shown) and clamping the lower separator 2, by moving the jaws in the direction of the arrows VI and then V (see Fig. 8);
j) moving the clamping unit 1 with the two separators 2 to stacking point A, and releasing the separators 2 onto the tray,
k) overhead clamping of the first bead 3 stowed on the stack by vertical entry of the jaws of the clamping unit 1 through the radial holes 2.1 of three separators 2 placed on the bead 3;
l) moving the clamping unit 1 with the clamped bead 3 and three separators 2 mounted thereon to transfer point B 8, releasing the bead 3 onto the mobile unit and clamping the lowermost separator 2;
m) moving the clamping unit 1 with the three separators 2 to stacking point A, and releasing the separators 2 onto the tray,
n) clamping the top of the first bead 3 stowed on the stack by vertical entry of the jaws of the clamping unit 1 through the radial holes 2.1 of the four separators 2 placed on the bead 3;
o) moving the clamping unit 1 with the clamped bead 3 and four separators 2 mounted thereon to transfer point B 8, releasing the bead 3 onto the mobile unit and clamping the lowermost separator 2;
p) moving the clamping unit 1 with the four separators 2 to collection point C 7 and releasing the separators 2 onto the separator tray 2;
q) cyclically repeating the above steps until the tray in stacking point A is emptied.

This method may preferably include also the following steps:
r) moving the clamping unit 1, possibly with up to three separators 2, to stacking point A 6 and clamping the empty tray via the fixed separator thereon;
s) moving the clamping unit 1 with the clamped tray and up to three separators 2, if any, to collection point C 7; and
t) releasing the tray and, where applicable, the separators 2 stacked thereon, to point C from which the tray filled with the appropriate number of separators 2 had already been removed, by moving the tray in the direction of arrow III (see Figure 1); transferring a new tray with supply of alternately stacked separators 2 and beads 3 to stacking point A 6, by moving the tray in the direction of arrow I;
u) cyclic repetition of steps (a) to (u).

### Example 5

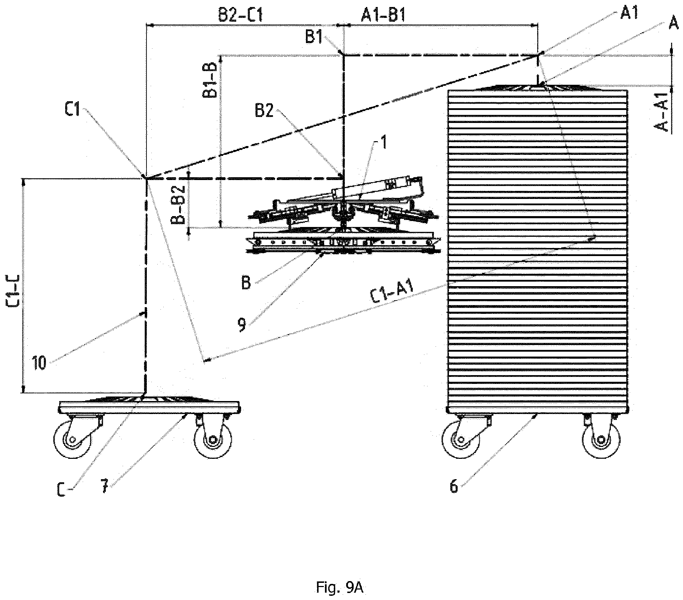

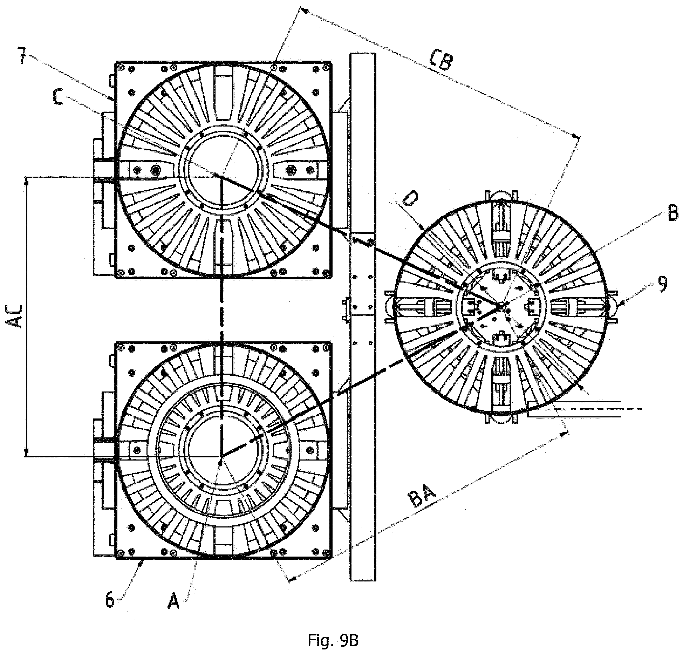

Figure 9a schematically illustrates the path of the clamping device 1 set out on a plane wherein stacking point A 6 is the starting point, transfer point B 8 is the handover point of the bead 3 and collection point C 7 is the point where the empty separator 2 is deposited. In conventional handling, the path starts at point A, goes to point C where the separator 2 is handed over and then the wire is brought to transfer point B. In the case of the present invention, the clamping device 1 is moved between point A and C n-times up to (n+1) times, and after the wire has been handed over at point B, it moves to deposit the empty separators at point C. However, this does not count the handling of the first bead (without separator), the advantage of which is lost when returning for the last empty separator (which may be rigidly fixed to the tray). Already at n=2 this produces quite a large saving in terms of the path and so time savings, while ensuring a longer device lifetime. If we neglect the changes in height after repositioning of the separators, and the distortion of the distance C1-A1 caused by simplification of the view (in reality they are right next to each other (Fig.1 and Fig.9B)) it can be said that in every second cycle we save 50% of the path and so also save in transport time of the device 1. In total, this would be 25%.

Fig. 9b shows a top view of the same arrangement as shown in Fig. 9a.

### Example 6

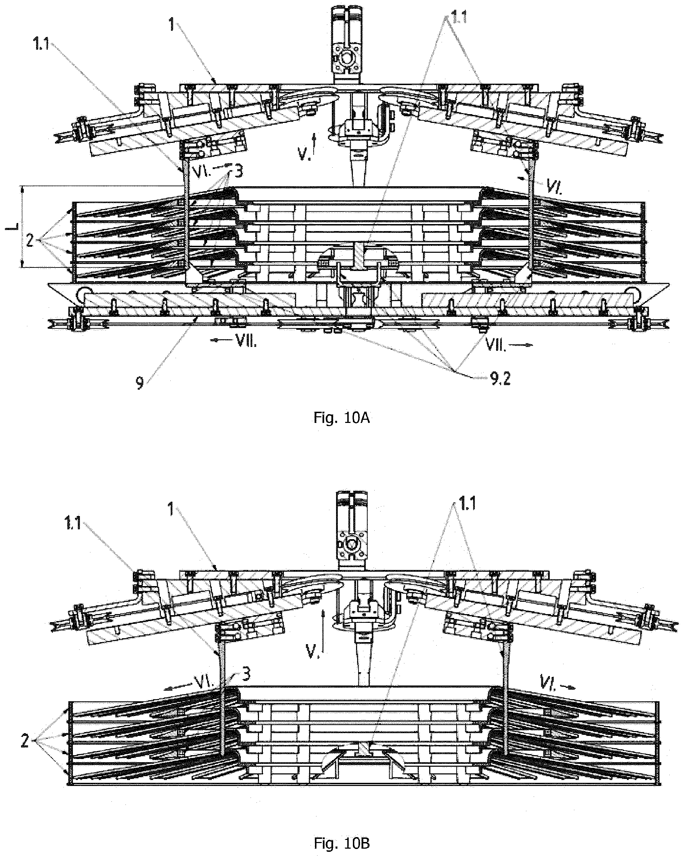

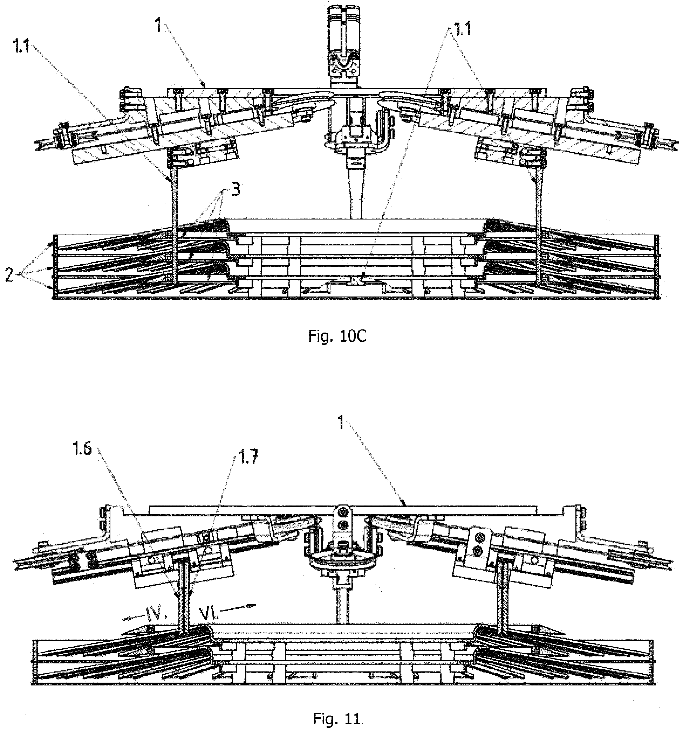

A second method of transferring the beads 3 from the tray to the mobile unit 9 of the building drum, for example by the device described in Example 1, is illustrated in Figures 10A to 10C. The method comprises the following steps:
I. moving the clamping unit 1 to stacking point A 6,
II. overhead clamping of the fifth bead 3 in the first cycle or of the fourth bead 3 in the second and each subsequent cycle, stowed on the stack, using the clamping unit 1, by vertical entry of the jaws of the clamping unit 1 through the radial openings 2.1 of the separators 2 placed thereon;
III. moving the clamping unit 1 with the beads 3 separated by the separators 2 to transfer point B 8, releasing the lowermost bead 3 onto the mobile unit 9 - by moving the jaws of the clamping unit 1 in the direction of the downward arrow V and then in the direction of arrow VI, and clamping the lowermost separator 2 in the direction of arrow VI (Fig. 10a);
IV. moving the clamping unit 1 to point C (Fig. 10b), and releasing the lowermost separator 2 onto the separator tray and clamping the bead 3 lying immediately above the released separator (Fig. 10c);
V. repeating steps III and IV until the clamping unit 1 is empty;
VI. cyclic repetition of steps I to V until the container in stacking point A 6 is emptied.

### Example 7

The clamping unit 1 shown in Figure 11 differs from the clamping unit shown in Figure 2 in that it comprises two clamping means on each arm, one clamping means 1.6 for clamping the beads 3 in the IV direction and one clamping means 1.7 for clamping the separator 2 in the VI direction.

### Example 8

Figure 13a shows a means for clamping both the bead and separator comprising an elongated part 1.1 and a fitting 1.3, wherein the elongated part 1.1 is adapted to carry four separators.

Figure 13b shows a means for clamping both bead and separator comprising an elongated part 1.1 and a fitting 1.3, wherein the elongated part 1.1 is adapted to carry two separators.

### Industrial applicability

The equipment according to the present invention is applicable in the rubber industry in the manufacture of radial car tyres.

### Reference signs:

1 clamping unit
1.1 elongated part
1.2 clamping unit drive
1.3 fitting
1.4 arm
1.5 cable transmission
1.6 means for clamping the bead
1.7 means for clamping the separator
2 separator
2.0 holding area for beads
2.1 radial opening
2.2 clamping edge
2.3 positioning pin
2.4 inner ring
2.5 relief cutout
2.6 projection
2.7 outer ring
3 bead
4 coordinate drive
5 frame
5.1 first frame conveyor 5
5.2 second frame conveyor 5
6 stacking point A
7 collection point C
8 transfer point B
9 mobile unit for transporting the bead to the building drum
9.2 jaws of mobile unit

## Claims

1. A transfer method of beads (3) and separators (2) for car tyres, comprising:
- providing a device for the transfer and placement of the beads and the separators (2), comprising a clamping unit (1) equipped with jaws for clamping the beads (3) or the separators (2);
- providing a stacking point A (6) comprising at least one tray with a supply of alternately stacked separators (2) and the beads (3), **characterised in that** the separators (2) have radial apertures for entry of the jaw of the clamping unit (1);
- providing a transfer point B (8) comprising a mobile unit (9) for transferring the beads (3) to the building drum;
- providing a collection point C (7) comprising at least one separator tray;
wherein the method comprises the following steps:
i. moving the clamping unit (1) to the stacking point A (6),
ii. overhead clamping of the first bead (3) stored on the stack by the clamping unit (1), if one or more separators (2) are on top, the clamping is performed by vertical entry of the jaws of the clamping unit (1) through a radial holes (2.1) of the separators (2),
iii. transfer of the clamping unit (1) with the clamped beads (3) and any separators (2) placed on the beads (3) to the transfer point B (8) and release of the beads (3) to the mobile unit, if one or more separators (2) are mounted on the transferred bead (3), the lowermost separator (2) is clamped;
iv. moving the clamping unit (1) with the separator (2) or the separators (2) to the stacking point A, and releasing the separators (2) onto the tray,
v. repeating steps ii to iv until the number of separators carried by the clamping unit (1) in step iii reaches number N, where N is a number from 2 to 8, preferably 4;
vi. moving the clamping unit (1) with N separators (2) to the collection point C (7) and releasing the separators (2) onto the separator tray (2),
vii. cyclic repetition of steps i to vi; or
wherein the method comprises the following steps:
I. moving the clamping unit (1) to the stacking point A (6),
II. overhead clamping of the N+1st bead (3) in the first cycle or the Nth bead (3) in the second and each subsequent cycle, deposited on the stack by the clamping unit (1), by vertical entry of the jaws of the clamping unit (1) through the radial holes (2.1) of the separators (2) placed thereon, where N is a number from 2 to 8, preferably 4,
III. transfer of the clamping unit (1) with the beads (3) spaced by the separators (2) to the transfer point B (8), release of the lowermost bead (3) to the mobile unit (9), and clamping of the lowermost separator (2);
IV. moving the clamping unit (1) to the point C, and releasing the lowermost separator onto the separator tray and clamping the bead wire (3) lying immediately above the released separator;
V. repeat steps III and IV until the clamping unit (1) is empty;
VI. cyclic repetition of steps I to V until the container in the stacking point A (6) is emptied;
VII. moving the clamping unit (1) to the stacking point A (6), clamping and transferring the empty tray to the collection point C (7), from which the separator tray already filled with the separators has been previously removed.

2. The method according to claim 1, steps i to vii, **characterized in that** the trays are in cart form and include a fixed separator, and the number of separators per tray in the stacking point A (6) including the fixed separator (2) is divisible by N, wherein the method further comprises:
- repeating step vii until in step ii the last of the beads stacked on the tray in the stacking point A (6) is clamped;
- performing step iii; and
- moving the clamping unit (1) to the stacking point A (6) and clamping the empty tray via the fixed separator thereon;
- moving the clamping unit (1) with the clamped tray and the separators (2) to the collection point C (7); and
- releasing the tray and the separators (2) thereon to the collection point C from which the separator tray that had already been filled with the appropriate number of the separators (2) was previously removed.

3. The transfer method according to any one of claims 1 to 2, **characterized in that** the clamping of the N-th separator (2) is carried out by introducing the elongated portions (1.1) with a fitting (1.3) through the radial holes (2. 1) of the stacked N separators (2) by vertical movement of the clamping unit (1) and subsequent inward radial movement of the clamping means until the fitting (1.3) of the clamping means fits under the clamping edges (2.2) of the N-th separator (2).

4. The transfer method according to any one of claims 1 to 3, **characterized in that** the clamping of the bead (3) is carried out by inserting the elongated portions (1.1) with the fitting (1.3) through the radial holes (2. 1) of at least one separator (2) by vertical movement of the clamping unit (1) and subsequent radial outward movement of the clamping means until the fitting (1.3) of the clamping means fits under the bead (3).

5. An apparatus for transferring and depositing beads (3) and separators (2) for carrying out the method according to any one of claims 1 to 4, **characterized in that** it comprises:
• a clamping unit (1) comprising at least two arms arranged at the same angular distance from each other, wherein each arm comprises:
∘ a radially movable means for clamping both the beads (3) and the separator (2), each separately, wherein the means comprises an elongated portion (1.1) with rounded edges arranged vertically downwards, wherein at the free end of the elongated portion (1.1) there is a fitting (1.3) designed in the form of a horizontal stop in at least radial directions, wherein the elongated portion (1.1) with the fitting (1.3) forms a jaw;
∘ an actuator (1.2) adapted for synchronous control of the movement of the clamping means;
• a frame (5) on which a coordinate drive (4) is movably mounted, enabling movement of the clamping unit (1) along x, y and z axes;
• a stacking point A (6) for at least one tray having a supply of alternately stacked separators (2) and the beads (3), wherein the separators (2) have radial apertures (2.1) adapted to receive the jaw of the clamping unit (1);
• a transfer point B (8) containing a mobile unit (9) for transferring the beads(3) to the building drum; and
• a collection point C (7) comprising at least one separator tray (2).

6. The apparatus according to claim 5, **characterized in that** the trays are in the form of a cart.

7. The apparatus according to claim 5 or 6, **characterized in that** the clamping unit comprises four arms arranged at the same angular distance from each other.

8. The apparatus according to any one of claims 5 to 7, **characterized in that** one of the clamping means is connected to the actuator (1.2) and the movement of the other means is synchronized by means of cable transmission (1.5).

9. The apparatus according to any one of claims 5 to 8, **characterized in that** the fitting (1.3) is in the form of a mount.

10. The apparatus according to any one of claims 5 to 9, **characterized in that** the length of the elongated portion (1.1) corresponds to at least twice the height of the separator, preferably five times the height of the separator.

11. The apparatus according to any one of claims 5 to 10, **characterized in that** each arm comprises two separate radially movable clamping means, one clamping means for clamping the beads (3) and one clamping means for clamping the separator (2).

12. A bead separator for use in the method according to any one of claims 1 to 4, wherein the separator (2) has a holding area (2.0) for the bead, in the form of a truncated conical shell, bound by an inner ring (2.4) and an outer ring (2. 7), **characterized in that**, it comprises a series of positioning pins (2.3) arranged around the circumference of the inner ring (2.4) and a series of projections (2.6) arranged on the holding area (2.0) on the outer side along the circle defining the innermost extreme position of the bead, and at least two radial openings (2.1), wherein the radial openings (2.1) are arranged on the holding area at the same angular distance from each other, and wherein each radial opening (2.1) comprises a clamping edge (2.2) in the form of a curve arranged concentrically with the inner ring (2.4) or in the form of a segment perpendicular to the radius of the separator (2), wherein the clamping edge (2.2) is arranged between the inner ring (2.4) and the circle passing through the projections (2.6), so that the space of the radial opening (2.1) defined by the clamping edge (2.2) and the circle passing through the projections (2.6) is adapted to receive the jaw of the clamping unit (1) of the device according to claims 5 to 11.

13. The bead separator according to claim 12, **characterized in that** it includes relief cut-outs (2.5) on the shell (2.0) of the truncated cone such that the inner and outer rings (2.4, 2.7) are not disturbed.

14. The separator according to claim 12 or 13, **characterized in that** it includes four radial apertures (2.1) arranged at an equal angular distance.

## Patentansprüche

1. Verfahren zur Übergabe von Wulsten (3) und Separatoren (2) für Autoreifen, umfassend:
- Bereitstellen einer Vorrichtung zum Übertragen und Platzieren der Wulste und der Separatoren (2), umfassend eine Klemmeinheit (1), die mit Backen zum Klemmen der Wulste (3) oder der Separatoren (2) ausgestattet ist;
- Bereitstellen eines Stapelpunktes A (6), der mindestens einen Speicher mit einem Vorrat an abwechselnd gestapelten Separatoren (2) und Wulsten (3) umfasst, **dadurch gekennzeichnet, dass** die Separatoren (2) radiale Öffnungen für den Eintritt der Backe der Klemmeinheit (1) aufweisen;
- Bereitstellen eines Übergabepunktes B (8), der eine mobile Einheit (9) zur Übergabe der Wulste (3) zur Aufbautrommel aufweist;
- Bereitstellen eines Sammelpunkts C (7), der mindestens einen Speicher für Separatoren aufweist;
wobei das Verfahren die folgenden Schritte umfasst:
i. Bewegen der Klemmeinheit (1) zum Stapelpunkt A (6),
ii. Überkopfklemmen des auf dem Stapel gelagerten ersten Wulstes (3) durch die Klemmeinheit (1), wenn ein oder mehrere Separatoren (2) oben liegen, wobei das Klemmen durch den vertikalen Eintritt der Backen der Klemmeinheit (1) durch radiale Öffnungen (2.1) der Separatoren (2) erfolgt,
iii. Übergabe der Klemmeinheit (1) mit geklemmten Wulsten (3) und etwaigen auf den Wulsten (3) platzierten Separatoren (3) zum Übergabepunkt B (8) und Freigabe der Wulste (3) an die mobile Einheit, wenn ein oder mehrere Separatoren (2) auf dem übergegebenen Wulst (3) angebracht sind, wird der unterste Separator (2) geklemmt;
iv. Bewegen der Klemmeinheit (1) mit dem Separator (2) oder den Separatoren (2) zum Stapelpunkt A, und Freigabe der Separatoren (2) auf den Speicher,
v. Wiederholen der Schritte ii bis iv, bis die Anzahl der von der Klemmeinheit (1) im Schritt iii getragenen Separatoren die Zahl N erreicht, wobei N eine Zahl von 2 bis 8, vorzugsweise 4, ist;
vi. Bewegen der Klemmeinheit (1) mit N Separatoren (2) zum Sammelpunkt C (7) und Freigabe der Separatoren (2) auf den Speicher für Separatoren (2),
vii. zyklische Wiederholung der Schritte i bis vi; oder
wobei das Verfahren die folgenden Schritte umfasst:
I. Bewegen der Klemmeinheit (1) zum Stapelpunkt A (6),
II. Überkopfklemmen des N+1-sten Wulstes (3) im ersten Zyklus oder des N-ten Wulstes (3) im zweiten und jeden nachfolgenden Zyklus, der von der Klemmeinheit (1) auf dem Stapel abgelegt wird, durch den vertikalen Eintritt der Backen der Klemmeinheit (1) durch radiale Öffnungen (2.1) der darauf angebrachten Separatoren (2), wobei N eine Zahl von 2 bis 8, vorzugsweise 4, ist,
III. Übergabe der Klemmeinheit (1) mit den durch die Separatoren (2) beabstandeten Wulsten (3) zum Übergabepunkt B (8), Freigabe des untersten Wulstes (3) an die mobile Einheit (9), und Klemmen des untersten Separators (2);
IV. Bewegen der Klemmeinheit (1) zum Punkt C, und Freigabe des untersten Separators auf den Speicher für Separatoren und Klemmen des unmittelbar über dem freigegebenen Separator liegenden Wulstdrahtes (3);
V. wiederholen Sie Schritte III und IV, bis die Klemmeinheit (1) leer ist;
VI. zyklische Wiederholung der Schritte I bis V, bis der Behälter im Stapelpunkt A (6) entleert ist;
VII. Bewegen der Klemmeinheit (1) zum Stapelpunkt A (6), Klemmen und Übergabe des leeren Behälters zum Sammelpunkt C (7), aus dem der bereits mit den Separatoren gefüllte Speicher für Separatoren zuvor entnommen wurde.

2. Verfahren nach Anspruch 1, Schritte i bis vii, **dadurch gekennzeichnet, dass** die Speicher in Wagenform sind und einen festen Separator enthalten, und die Anzahl der Separatoren pro Speicher im Stapelpunkt A (6) einschließlich des festen Separators (2) durch N teilbar ist, wobei das Verfahren ferner umfasst:
- Wiederholen von Schritt vii, bis im Schritt ii der letzte der im Speicher im Stapelpunkt A (6) gestapelten Wulsten geklemmt ist;
- Ausführen von Schritt iii; und
- Bewegen der Klemmeinheit (1) zum Stapelpunkt A (6) und Klemmen des leeren Speichers über den festen Separator darauf;
- Bewegen der Klemmeinheit (1) mit dem geklemmten Speicher und den Separatoren (2) zum Sammelpunkt C (7); und
- Freigabe des Speichers und der Separatoren (2) darauf zum Sammelpunkt C, von dem zuvor der bereits mit der entsprechenden Anzahl von Separatoren (2) gefüllte Speicher für Separatoren entnommen wurde.

3. Übergabeverfahren nach einem der Ansprüche 1 bis 2, **dadurch gekennzeichnet, dass** das Klemmen des N-ten Separators (2) durch Einführen der länglichen Abschnitte (1.1) mit einem Anschlussstück (1.3) durch radiale Öffnungen (2. 1) der gestapelten N Separatoren (2) durch vertikale Bewegung der Klemmeinheit (1) und nachfolgende radiale Bewegung des Klemmmittels nach innen erfolgt, bis das Anschlussstück (1.3) des Klemmmittels unter die Spannkanten (2.2) des N-ten Separators passt (2).

4. Übergabeverfahren nach einem der Ansprüche 1 bis 3, **dadurch gekennzeichnet, dass** das Klemmen des Wulstes (3) durch Einführen der länglichen Abschnitte (1.1) mit einem Anschlussstück (1.3) durch radiale Öffnungen (2. 1) mindestens eines Separators (2) durch vertikale Bewegung der Klemmeinheit (1) und nachfolgende radiale Bewegung des Klemmmittels nach außen erfolgt, bis das Anschlussstück (1.3) des Klemmmittels unter den Wulst (3) passt.

5. Eine Vorrichtung zur Übergabe und Ablegen von Wulsten (3) und Separatoren (2) zur Durchführung des Verfahrens nach einem der Ansprüche 1 bis 4, **dadurch gekennzeichnet, dass** sie umfasst:
• eine Klemmeinheit (1) mit mindestens zwei in gleichem Winkelabstand zueinander angeordneten Armen, wobei jeder Arm umfasst:
∘ ein radial bewegliches Mittel zum Klemmen sowohl der Wulste (3) als auch des Separators (2), jeweils separat, wobei das Mittel einen länglichen Abschnitt (1.1) mit senkrecht nach unten angeordneten abgerundeten Kanten umfasst, wobei am freien Ende des länglichen Abschnitts (1.1) ein Anschlussstück (1.3) angeordnet ist, der in Form eines horizontalen Anschlags in zumindest radialen Richtungen gestaltet ist, wobei der längliche Abschnitt (1.1) mit dem Anschlussstück (1.3) eine Backe bildet;
∘ einen Stellantrieb (1.2), der für die synchrone Steuerung der Bewegung des Klemmmittels geeignet ist;
• einen Rahmen (5), an dem ein Koordinatenantrieb (4) beweglich angebracht ist, der die Bewegung der Klemmeinheit (1) entlang der x-, y- und z-Achse ermöglicht;
• einen Stapelpunkt A (6) für mindestens einen Speicher mit einem Vorrat an abwechselnd gestapelten Separatoren (2) und Wulsten (3), **dadurch gekennzeichnet, dass** die Separatoren (2) radiale Öffnungen (2.1) aufweisen, die geeignet sind, die Backe der Klemmeinheit (1) aufzunehmen;
• einen Übergabepunkt B (8), der eine mobile Einheit (9) zur Übergabe der Wulste (3) an die Aufbautrommel umfasst; und
• einen Sammelpunkt C (7), der mindestens einen Speicher für Separatoren (2) umfasst.

6. Die Vorrichtung nach Anspruch 5, **dadurch gekennzeichnet, dass** die Speicher in Wagenform sind.

7. Die Vorrichtung nach Anspruch 5 oder 6, **dadurch gekennzeichnet, dass** die Klemmeinheit vier in gleichem Winkelabstand zueinander angeordnete Arme umfasst.

8. Die Vorrichtung nach einem der Ansprüche 5 bis 7, **dadurch gekennzeichnet, dass** eines der Klemmmittel mit dem Stellantrieb (1.2) verbunden ist und die Bewegung der anderen Mittel mittels einer Kabelübertragung (1.5) synchronisiert ist.

9. Die Vorrichtung nach einem der Ansprüche 5 bis 8, **dadurch gekennzeichnet, dass** das Anschlussstück (1.3) die Form einer Halterung hat.

10. Die Vorrichtung nach einem der Ansprüche 5 bis 9, **dadurch gekennzeichnet, dass** die Länge des länglichen Abschnitts (1.1) mindestens der doppelten Höhe des Separators, vorzugsweise der fünffachen Höhe des Separators entspricht.

11. Die Vorrichtung nach einem der Ansprüche 5 bis 10, **dadurch gekennzeichnet, dass** jeder Arm zwei getrennte, radial bewegliche Klemmmittel umfasst, ein Klemmmittel zum Klemmen der Wulste (3) und ein Klemmmittel zum Klemmen des Separators (2).

12. Ein Separator der Wulsten zur Verwendung in dem Verfahren nach einem der Ansprüche 1 bis 4, wobei der Separator (2) einen Haltebereich (2.0) für den Wulst in Form einer kegelstumpfförmigen Schale aufweist, die durch einen inneren Ring (2.4) und einen äußeren Ring (2. 7) begrenzt ist, **dadurch gekennzeichnet, dass** er eine Reihe von Positionierstiften (2.3) umfasst, die um den Umfang des inneren Rings (2.4) herum angeordnet sind, und eine Reihe von Vorsprüngen (2.6), die auf der Haltefläche (2.0) an der Außenseite entlang des Kreises angeordnet sind, der die innerste Endposition des Wulstes definiert, und mindestens zwei radiale Öffnungen (2.1) umfasst, wobei die radialen Öffnungen (2.1) im gleichen Winkelabstand zueinander auf der Haltefläche angeordnet sind, und wobei jede radiale Öffnung (2.1) einen Klemmrand (2.2) in Form einer konzentrisch zum Innenring (2.4) angeordneten Kurve oder in Form eines zum Radius des Separators (2) senkrecht stehenden Segmentes aufweist, wobei der Klemmrand (2.2) zwischen dem Innenring (2.4) und dem durch die Vorsprünge (2.6) verlaufenden Kreis angeordnet ist, so dass der durch den Klemmrand (2.2) und den durch die Vorsprünge (2.6) verlaufenden Kreis definierte Raum der radialen Öffnung (2.1) zur Aufnahme der Backe der Klemmeinheit (1) der Vorrichtung nach einem der Ansprüche 5 bis 11 geeignet ist.

13. Der Separator der Wulsten nach Anspruch 12, **dadurch gekennzeichnet, dass** er an der Schale (2.0) des Kegelstumpfes Entlastungsausschnitte (2.5) aufweist, so dass die Innen- und Außenringe (2.4, 2.7) nicht gestört werden.

14. Der Separator nach Anspruch 12 oder 13, **dadurch gekennzeichnet, dass** er vier radiale Öffnungen (2.1) aufweist, die in gleichem Winkelabstand angeordnet sind.

## Revendications

1. Procédé de transfert de talons (3) et de séparateurs (2) pour pneus de voiture, comprenant :
- fourniture d'un dispositif pour le transfert et le placement des talons et des séparateurs (2), y compris une unité (1) de serrage pourvue de mâchoires pour le serrage des talons (3) ou des séparateurs (2);
- fourniture d'un point d'empilage A (6) comprenant au moins un bac avec une série de séparateurs (2) empilés en alternance et les talons (3), **caractérisé par le fait que** les séparateurs (2) ont des ouvertures radiales pour l'entrée des mâchoires de l'unité (1) de serrage;
- fourniture d'un point de transfert B (8) comprenant une unité (9) mobile pour transférer les talons (3) au tambour de fabrication;
- fourniture d'un point de collecte C (7) comprenant au moins un bac à séparateurs;
où le procédé comprend les étapes suivantes :
i. déplacement de l'unité (1) de serrage vers le point d'empilage A (6);
ii. serrage en hauteur du premier talon (3) stocké sur la pile par l'unité (1) de serrage, si un ou plusieurs séparateurs (2) sont au-dessus, le serrage est réalisé par l'entrée verticale des mâchoires de l'unité (1) de serrage à travers les trous radiaux (2.1) des séparateurs (2);
iii. transfert de l'unité de serrage (1) avec les talons (3) serrés et avec des séparateurs (2) placés sur les talons (3) vers le point de transfert B (8) et déblocage des talons (3) vers l'unité mobile, si un ou plusieurs séparateurs (2) sont montés sur le talon (3) transféré, le séparateur (2) le plus bas est serré;
iv. déplacement de l'unité (1) de serrage avec le séparateur (2) ou les séparateurs (2) vers le point d'empilage A, et déblocage des séparateurs (2) sur le bac;
v. répétition des étapes de ii à iv jusqu'à quand le nombre des séparateurs transportés par l'unité (1) de serrage dans l'étape iii atteigne le nombre N, où N est un nombre compris entre 2 et 8, de préférence 4;
vi. déplacement de l'unité (1) de serrage avec N séparateurs (2) vers le point de collecte C (7) et déblocage des séparateurs (2) vers le bac à séparateurs (2);
vii. répétition cyclique des étapes de i à vi ; ou
où le procédé comprend les étapes suivantes :
I. déplacement de l'unité (1) de serrage vers le point d'empilage A (6),
II. serrage en hauteur du N+1er talon (3) dans le premier cycle de l'N-ième talon (3) dans le deuxième cycle et dans chaque cycle successif, déposé sur la pile par l'unité (1) de serrage, par l'entrée verticale des mâchoires de l'unité (1) de serrage à travers les trous (2.1) radiaux des séparateurs (2) placés dessus, où N est un nombre compris entre 2 et 8, de préférence 4;
III. transfert de l'unité (1) de serrage avec les talons (3) écartés par les séparateurs (2) vers le point de transfert B (8), déblocage du talon (3) le plus bas vers l'unité (9) mobile, et serrage du séparateur (2) le plus bas;
IV. transfert de l'unité (1) de serrage vers le point C, et déblocage du séparateur le plus bas sur le bac à séparateurs et serrage de la tringle (3) située immédiatement au-dessus du séparateur relâché;
V. répétez les étapes III et IV jusqu'à ce que l'unité (1) de serrage soit vide;
VI. répétition cyclique des étapes de I à IV jusqu'à ce que le conteneur dans le point d'empilage A (6) soit vide;
VII. transfert de l'unité (1) de serrage vers le point d'empilage A (6), serrage et transfert du bac vide vers le point de collecte C (7), duquel on a préalablement retiré le bac à séparateurs déjà rempli de séparateurs.

2. Procédé selon la revendication 1, étapes de i à vii, **caractérisé par le fait que** les bacs ont la forme de chariots et incluent un séparateur fixe, et le nombre de séparateurs par bac dans le point d'empilage A (6), y compris le séparateur (2) fixe, est divisible par N, où le procédé comprend également :
- répétition de l'étape vii jusqu'à ce que - dans l'étape ii - le dernier des talons empilés sur le bac dans le point d'empilage A (6) soit serré;
- réalisation de l'étape iii; et
- transfert de l'unité (1) de serrage vers le point d'empilage A (6), et serrage du bac vide à l'aide du séparateur fixe là-dessus;
- déplacement de l'unité (1) de serrage avec le bac serré et les séparateurs (2) vers le point de collecte C (7); et
- déblocage du bac et des séparateurs (2) là-dessus vers le point de collecte C duquel on a préalablement retiré le bac à séparateurs déjà rempli du nombre approprié de séparateurs (2).

3. Procédé de transfert selon l'une de revendications de 1 à 2, **caractérisé par le fait que** le serrage de l'N-ième séparateur (2) est réalisé en introduisant les parties (1.1) allongées avec un raccord (1.3) à travers les trous (2.1) radiaux des N séparateurs (2) empilés à travers un mouvement vertical de l'unité (1) de serrage et un subséquent mouvement radial interne des moyens de serrage jusqu'à ce que le raccord (1.3) des moyens de serrage s'insère sous les bords (2.2) de serrage de l'N-ième séparateur (2).

4. Procédé de transfert selon l'une de revendications de 1 à 3, **caractérisé par le fait que** le serrage du talon (3) est réalisé en insérant les parties (1.1) allongées avec un raccord (1.3) à travers les trous (2.1) radiaux d'au moins un séparateur (2) à travers un mouvement vertical de l'unité (1) de serrage et un subséquent mouvement radial externe des moyens de serrage jusqu'à ce que le raccord (1.3) des moyens de serrage s'insère sous le talon (3).

5. Un appareil pour transférer et déposer les talons (3) et les séparateurs (2) afin de réaliser le procédé selon l'une des revendications de 1 à 4, **caractérisé par le fait qu'**il comprend :
• une unité (1) de serrage comprenant au moins deux bras disposé à la même distance angulaire l'un de l'autre, où chaque bras comprend :
∘ un moyen radialement mobile pour serrer soit les talons (3) soit le séparateur (2), chacun séparément, où ledit moyen comprend une partie (1.1) allongée avec des bords arrondis disposés verticalement vers le bas, où à l'extrémité libre de la partie (1.1) allongée il y a un raccord (1.3) conçu en forme d'arrêt horizontal dans les directions au moins radiales, où la partie (1.1) allongée avec le raccord (1.3) forme une mâchoire;
∘ un actionneur (1.2) adapté pour la commande synchrone du mouvement du moyen de serrage;
• un châssis (5) sur lequel un lecteur (4) de coordonnées est monté de manière mobile, permettant le mouvement de l'unité (1) de serrage le long des axes x, y et z;
• un point d'empilage A (6) pour au moins un bac ayant une série de séparateurs (2) empilés en alternance et les talons (3), où les séparateurs (2) ont des ouvertures (2.1) radiales adaptées pour recevoir la mâchoire de l'unité (1) de serrage;
• un point de transfert B (8) contenant une unité mobile (9) pour transférer les talons (3) au tambour de fabrication; et
• un point de collecte C (7) comprenant au moins un bac à séparateurs (2).

6. L'appareil selon la revendication 5, **caractérisé par le fait que** les bacs ont la forme d'un chariot.

7. L'appareil selon la revendication 5 ou 6, **caractérisé par le fait que** l'unité de serrage comprend quatre bras disposés à la même distance angulaire les uns des autres.

8. L'appareil selon l'une des revendications de 5 à 7, **caractérisé par le fait qu'**un des moyens de serrage est lié à l'actionneur (1.2) et le mouvement de l'autre moyen est synchronisé à l'aide d'une transmission (1.5) à travers un câble.

9. Procédé selon l'une des revendications de 5 à 8 **caractérisé par le fait que** le raccord (1.3) a la forme d'un mont.

10. L'appareil selon l'une des revendications de 5 à 9, **caractérisé par le fait que** la longueur de la partie (1.1) allongée correspond à au moins le double de la hauteur du séparateur, de préférence cinq fois la hauteur du séparateur.

11. L'appareil selon l'une des revendications de 5 à 10, **caractérisé par le fait que** chaque bras comprend deux moyens de serrage séparés à mobilité radiale, un premier moyen de serrage pour serrer les talons (3) et un deuxième moyen de serrage pour serrer le séparateur (2).

12. Un séparateur de talon à utiliser dans le cadre du procédé selon l'une des revendications de 1 à 4, où le séparateur (2) est pourvu d'une zone (2.0) de retenue pour le talon, sous la forme d'une coque tronquée conique, délimitée par un anneau (2.4) intérieur et un anneau (2.7) extérieur, **caractérisé par le fait qu'**il comprend une série de pivots (2.3) de positionnement disposés autour de la circonférence de l'anneau (2.4) intérieur et une série de projections (2.6) disposées dans la zone (2.0) de retenue sur le côté extérieur, le long du cercle définissant la position extrême la plus intérieure du talon, et au moins deux ouvertures (2.1) radiales, où les ouvertures (2.1) radiales sont disposées dans la zone de retenue à la même distance angulaire les uns des autres, et où chaque ouverture (2.1) radiale comprend un bord (2.2) de serrage sous la forme d'une courbe disposée concentriquement à l'anneau (2.4) intérieur ou sous la forme d'un segment perpendiculaire au rayon du séparateur (2), où le bord (2.2) de serrage est disposé entre l'anneau (2.4) intérieur et le cercle passant par les projections (2.6), de sorte que l'espace de l'ouverture (2.1) radiale défini par le bord (2.2) de serrage et par le cercle passant par les projections (2.6) soit adapté afin de recevoir la mâchoire de l'unité (1) de serrage du dispositif selon les revendications de 5 à 11.

13. Le séparateur de talons selon la revendication 12, **caractérisé par le fait qu'**il comprend des découpes (2.5) en relief sur la coque (2.0) du cône tronqué de telle sorte que l'anneau intérieur et l'anneau (2.4, 2.7) extérieur ne soient pas touchés.

14. Le séparateur selon la revendication 12 ou 13, **caractérisé par le fait qu'**il comprend quatre ouvertures (2.1) radiales disposées à la même distance angulaire.
